# EUROPEAN PATENT SPECIFICATION

(11) **EP 4 371 818 B1**
(45) Date of publication and mention of the grant of the patent: **25.02.2026**
(21) Application number: 22208094.7
(22) Date of filing: 17.11.2022
(51) Int. Cl.: B60N 2/90

(54) **PNEUMATIC MAT WITH IMPROVED SHAPE**
PNEUMATISCHE MATTE MIT VERBESSERTER FORM
TAPIS PNEUMATIQUE DE FORME AMÉLIORÉE

(43) Date of publication of application: 22.05.2024
(73) Proprietor: Schukra Berndorf GmbH, 2560 Berndorf (AT)
(72) Inventor: SAMAIN, Maxime, 8530 Harelbeke (BE)
(74) Representative: Kraus & Lederer PartGmbB

(56) References cited:
- WO-A2-2006/096430
- US-A1- 2004 226 102
- US-A1- 2010 024 132
- US-A1- 2018 178 698

## Description

The present invention relates to the field of pneumatic bladders and, in particular, to a pneumatic mat with a shape allowing an efficient use of the material sheets used for the manufacturing thereof.

### State of the art

Pneumatic mats are known to provide an adjustable support in various types of seats, and in particular in car seats. By appropriately inflating and deflating one or more mats in the seat, support can be changed at various areas of the seat to fit people with different body shapes and/or seating preferences.

Pneumatic mats are known in the art which are realized by bonding together two or more sheets of flexible material. US 2004/226102 discloses bladders with corresponding shape.

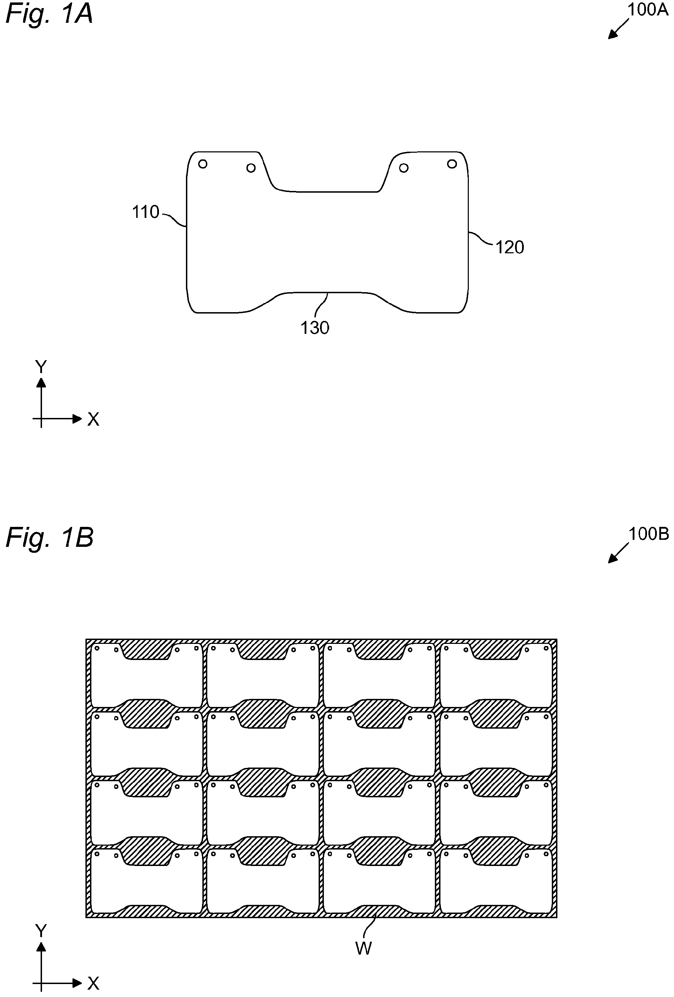

Figure 1A schematically illustrates one pneumatic mat 100A. In particular, Figure 1A can be understood to illustrate the shape of the mat 100A when not inflated, and/or the shape which is cut from the sheet of flexible material in order to obtain the bottom and/or top layer of the mat 100A.

Pneumatic mat 100A comprises two pneumatic bladders 110, 120, connected by a channel. In the context of this application, a pneumatic bladder can be understood to be an inflatable device with a main single inflatable chamber. In the mat 100A, two such chambers, or bladders, are obtained in the left and right sides along direction X.

The bladders 110, 120 are connected via the channel 130, which has a smaller dimension than the bladders 110, 120. In particular, the channel 130 has a lower cross section than bladders 110, 120 along the plane perpendicular to the illustrated XY plane. This results in the channel 130 becoming less thick when inflated, compared to the bladders 110, 120

This configuration is particularly advantageous when the mat 100A is to be used, for instance, behind the user's back. In particular, the illustrated direction Y could correspond to the vertical direction in a seat, and the extension along direction X could be substantially corresponding to the seat's width. In this case, the reduced thickness of the channel 130, when the bladder is inflated, reduces pressure on the user's spine. It will be obvious that similar advantages can be obtained when using the mat 100A in other seats positions, such as around the neck or below the thighs.

The reduced dimension of the channel 130, compared to the bladders 110, 120, results in a lower length across direction Y, as illustrated. This, in turn, results in the shape of figure 1A, similar to a dog's bone.

As mentioned, pneumatic mat 100A is obtained by cutting this shape from at least two sheets of flexible material and bonding them together. Figure 1B schematically illustrates a plurality of mats 100A being realized from such a flexible sheet 100B.

As can be seen in figure 1B, due to the specific shape of mat 100A, a substantial amount of material of the sheet 100B is not used for implementing any of the mats 100A. This waste material W, indicated by the shaded portion of figure 1B, is therefore material of the flexible sheet which cannot be productively used.

In large scale manufacturing of the bladder, such waste material W represents a significant cost.

### Summary of the invention

There is therefore a need to develop a pneumatic mat which reduces waste material. This need is met by the pneumatic mat of the invention, as defined by claim 1. The dependent claims further indicate additional advantages of the pneumatic mat.

An embodiment of the invention can therefore relate to a pneumatic mat comprising a first pneumatic bladder, a second pneumatic bladder, and a channel connecting the first pneumatic bladder and the second pneumatic bladder, wherein a first region between the first pneumatic bladder and the second pneumatic bladder has a shape substantially corresponding to a first portion of the first pneumatic bladder.

In some embodiments, the channel can connect the first and second bladder along a longitudinal direction and, along a direction perpendicular to the longitudinal direction, the channel can extend between a channel top end and a channel bottom end. Moreover, the mat can extend between a mat top end and a mat bottom end, along the direction perpendicular to the longitudinal direction. The first region can be an area comprised between the channel top end and the mat top end, along the direction perpendicular to the longitudinal direction, and comprised between the first pneumatic bladder and the second pneumatic bladder, along the longitudinal direction.

In some embodiments, the first portion can be a part of the first pneumatic bladder comprised between the channel top end and the mat top end.

In some embodiments, an area of the first region can be substantially superimposable with an area of the first portion rotated by 180°.

In some embodiments, a second region between the first pneumatic bladder and the second pneumatic bladder can have a shape substantially corresponding to a second portion of the first pneumatic bladder.

In some embodiments, the channel can connect the first and second bladder along a longitudinal direction and, along a direction perpendicular to the longitudinal direction, the channel can extend between a channel top end and a channel bottom end. Moreover, the second region can be an area comprised between the channel bottom end and the mat bottom end, along the direction perpendicular to the longitudinal direction, and comprised between the first pneumatic bladder and the second pneumatic bladder, along the longitudinal direction.

In some embodiments, the second portion can be a part of the first pneumatic bladder comprised between the channel bottom end and the mat bottom end.

In some embodiments, an area of the second region can be substantially superimposable with an area of the second portion rotated by 180°.

In some embodiments, the channel can connect the first and second bladder along a longitudinal direction, and the channel can have a channel length along the longitudinal direction. Additionally, a third region can be defined between the second pneumatic bladder and an hypothetical additional first pneumatic bladder, the additional first pneumatic bladder corresponding to the first pneumatic bladder and being hypothetically placed at a distance, from the second bladder and along the longitudinal direction, corresponding to the channel length. Moreover, the third region can have a shape substantially corresponding to a third portion of the second pneumatic bladder.

In some embodiments, the third region can be an area comprised between the channel bottom end and the mat bottom end, along the direction perpendicular to the longitudinal direction, and comprised between the second pneumatic bladder and the additional first pneumatic bladder, along the longitudinal direction.

In some embodiments, the third portion can be a part of the second pneumatic bladder comprised between the channel bottom end and the mat bottom end.

In some embodiments, an area of the third region can be substantially superimposable with an area of the third portion rotated by 180°.

In some embodiments, the channel can connect the first and second bladder alongs a longitudinal direction, and can have a channel length along the longitudinal direction. Additionally, a fourth region can be defined between the second pneumatic bladder and an hypothetical additional first pneumatic bladder, the additional first pneumatic bladder corresponding to the first pneumatic bladder and being hypothetically placed at a distance, from the second bladder and along the longitudinal direction, corresponding to the channel length. The fourth region can have a shape substantially corresponding to a fourth portion of the second pneumatic bladder.

In some embodiments, the channel can connect the first and second bladder along a longitudinal direction and, along a direction perpendicular to the longitudinal direction, the channel can extend between a channel top end and a channel bottom end. Moreover, the fourth region can be an area comprised between the channel bottom end and the mat bottom end, along the direction perpendicular to the longitudinal direction, and comprised between the second pneumatic bladder and the additional first pneumatic bladder, along the longitudinal direction.

In some embodiments, the fourth portion can be a part of the first pneumatic bladder comprised between the channel bottom end and the mat bottom end.

In some embodiments, an area of the fourth region can be substantially superimposable with an area of the fourth portion rotated by 180°.

In some embodiments, each of the first pneumatic bladder and of the second pneumatic bladder can have a substantially hexagonal shape.

In some embodiments, the first pneumatic bladder and/or the second pneumatic bladder can comprise an inflatable portion, connected to the channel, and an hanging portion, not connected to the channel, comprising hanging means for hanging the pneumatic mat to a seat frame.

In some embodiments, the inflatable portion can inscribe an inscribed circle and can escribe an escribed circle. A difference in radius between the inscribed circle and the escribed circle, with respect to the radius of the escribed circle can be lower than 20%, preferably lower than 15%.

In some embodiments, the inscribed circle and the escribed circle can have the same centre.

In some embodiments, the channel can connect the first and second bladder along a longitudinal direction and, along a direction perpendicular to the longitudinal direction, the channel can extend between a channel top end and a channel bottom end. Similarly, the inflatable portion can extend between an inflatable portion top end and an inflatable portion bottom end, along the direction perpendicular to the longitudinal direction. The channel extension along the direction perpendicular to the longitudinal direction can overlap a middle point between the inflatable portion top end and the inflatable portion bottom end.

In some embodiments, the channel can connect the first and second bladder along a longitudinal direction and, along a direction perpendicular to the longitudinal direction, the channel can extend between a channel top end and a channel bottom end. Similarly, the inflatable portion can extend between an inflatable portion top end and an inflatable portion bottom end, along the direction perpendicular to the longitudinal direction. A distance between the channel top end and the channel bottom end can be less than 35%, preferably less than 30%, even more preferably less than 25% than a distance between the inflatable portion top end and the inflatable portion bottom end.

A further embodiment of the invention can relate to a manufacturing method for pneumatic bladders according to any previous claim, comprising the steps of positioning a first sheet of flexible material above a second sheet of flexible material, bonding the first and second sheets of flexible material so as to obtain even rows of pneumatic bladders and odd rows of pneumatic bladders. In particular, the pneumatic mats in the even rows can be staggered with the pneumatic mats in the odd rows.

In some embodiments, the pneumatic mats in the even rows can be rotated by 180° with respect to the pneumatic mats in the odd rows.

### Brief description of the drawings

Figure 1A schematically illustrates a pneumatic mat 100A according to the state of the art;
Figure 1B schematically illustrates a flexible sheet 100B comprising a plurality of pneumatic mats 100A;
Figures 2A and 2E schematically illustrate a pneumatic mat 200;
Figure 2B schematically illustrates a combination of two pneumatic mat 200;
Figure 2C schematically illustrates a flexible sheet 200C comprising a plurality of pneumatic mats 200;
Figure 2D schematically illustrates a flexible sheet 200D comprising a plurality of pneumatic mats 200;
Figures 3A and 3B schematically illustrate a pneumatic mat 300;
Figures 4A and 4B schematically illustrate a pneumatic mat 400;
Figures 5A and 5B schematically illustrate a pneumatic mat 500;
Figures 6A, 6B and 6C schematically illustrate a pneumatic mat 600;
Figure 7A and 7B schematically illustrate a pneumatic mat arrangement 700 comprising a first pneumatic mat 700A and a second pneumatic mat 700B;
Figure 7C schematically illustrates a flexible sheet 700C comprising a plurality of pneumatic mats 700B.

### Detailed description of the drawings

The invention is generally related to implementing a pneumatic mat with a shape which is particularly advantageous for the manufacturing as well as the usage of the mat. While various specific shapes are illustrated in the drawings, it is understood that the invention is not limited to the specifically illustrated shapes but, rather extends to shapes as described below and as defined by the claims.

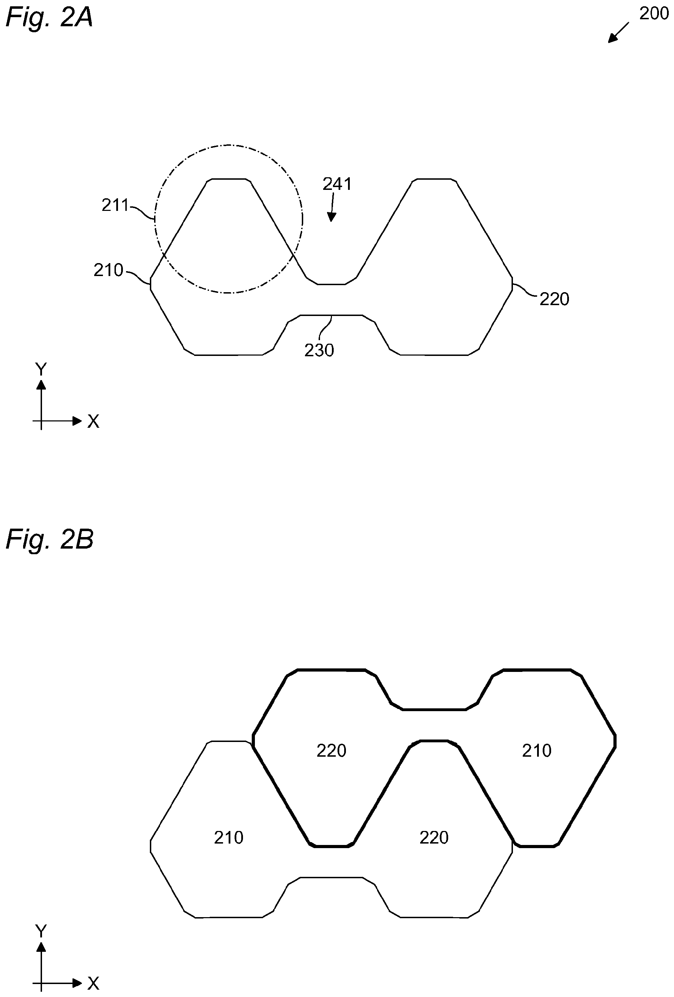

Figure 2A schematically illustrates a pneumatic mat 200 comprising a first pneumatic bladder 210, a second pneumatic bladder 220, and a channel 230 connecting the first pneumatic bladder 210 and the second pneumatic bladder 220.

It will be cleat to those skilled in the art that the illustrated mat 200, as well as of any other mats illustrated in the figures, can be understood as being the mat in its non-inflated, flat configuration. Alternatively, or in addition, the shape of the illustrated mat 200, as well as of any other mats illustrated in the figures, can be understood as being the shape cut from the sheet of flexible material for obtaining the lower and/or top layers of the mat 200, which can then be bonded to implement the mat 200.

In the following description, reference will be made to directions such as up and down, top and bottom, left and right. Those references are to be understood with reference to the orientation of the mat 200 illustrated in the XY coordinate system of figure 2A. The orientation of the mat illustrated in figure 2A is a preferred deployment orientation in a backrest of a seat. The direction Y can be understood as being a direction of vertical extension of the backrest. Alternatively, or in addition, the plane XY can be understood as the plane defined by the backrest.

Still alternatively, or in addition, the mat 200 can be understood as having a substantially planar shape, preferably in its deflated configuration, this planar shape defining the XY plane. A longitudinal direction can be defined by the positions of the first bladder 210, channel 230 and second bladder 220. This longitudinal direction corresponds to the X direction. Alternatively, or in addition, the X direction can correspond to the direction of longest extension of the mat 200. The Y direction can be understood as being the direction perpendicular to the X direction, in the XY plane comprising the mat 200.

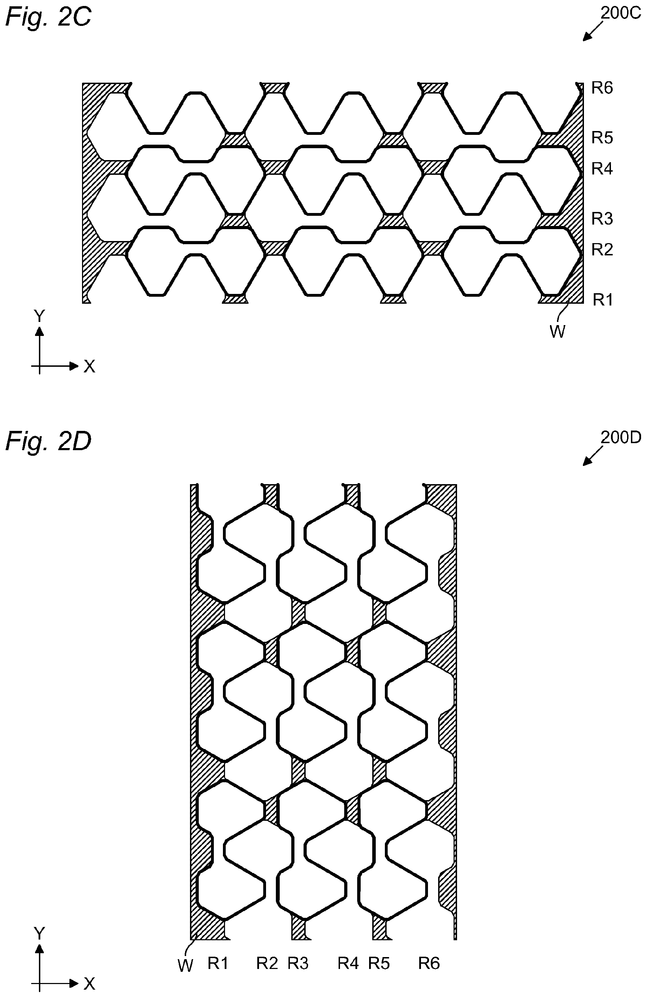

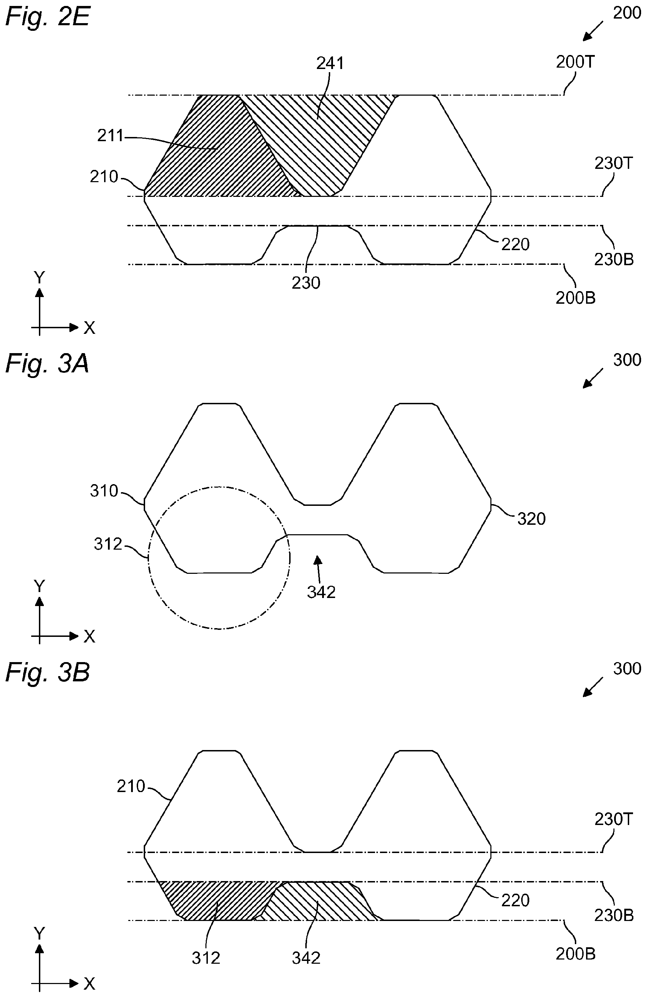

Depending on the specific shape of the bladders 210, 220 and of the channel 230, the definition of where precisely a bladder end and the channel begins may vary. In general, it will be understood that a bladder 210, 220 can be defined as extending in the Y direction for a length longer than channel 230. Channel 230 might also be defined as a region of the mat having an extension along direction Y which is substantially the same across the length of the channel in the X direction. Alternatively, or in addition, the mat 200 can have an external perimeter when flat, as illustrated in figure 2. Each bladder 210, 220 can be defined as corresponding to a continuous part of the perimeter having only internal angles less than 180 degrees. Conversely, a part of the perimeter having an internal angle above 180 degrees can be understood as defining the beginning of the channel 130. Still alternatively, or in addition, the channel can be defined as the portion of the mat 200 having an extension in Y direction which is not more than 20% larger than the minimum extension of the mat 200 in the Y direction.

As can be seen in figure 2, mat 200 comprises a first region 241 between the first pneumatic bladder 210 and the second pneumatic bladder 220. The first region 241 is empty and includes no flexible material.

As visible, the first region 241 has a shape substantially corresponding to a first portion 211 of the first pneumatic bladder 210. Preferably, the first region 241 and the first portion 211 are on the same side of the mat 200, in the Y direction, with respect to an intermediate portion of the mat 200, substantially corresponding to the Y position of the channel 230.

Thanks to this arrangement, as can be seen in figure 2B, when two mats 200 are obtained from a single sheet of flexible material, the two mats 200 can be advantageously cut out of the sheet as illustrated. In particular, the first portion 211 of one mat 200 can be inserted into the first region 241 of another mat. Even more specifically, the first portion 211 of one mat 200 can occupy most or all of the first region 241 of another mat.

In this manner, as can be seen in figure 2C, a plurality of odd rows R1, R3, R5 can be obtained from a single sheet of flexible material with one or more pneumatic mat 200 per row, preferably at least two pneumatic mat 200 per row. Similarly, a plurality of even rows R1, R3, R5 can be obtained from a single sheet of flexible material with one or more pneumatic mat 200 per row, preferably at least two pneumatic mat 200 per row. The mats 200 in the odd rows R1, R3, R5 are oriented as visible in figure 2A, while the mats 200 in the even rows R2, R4, R6 are rotated by 180 degrees with respect to the mats 200 in the odd rows R1, R3, R5.

As visible in figure 2C, this significantly reduces the amount of waste material W from the sheet of flexible material. Moreover, in those embodiments where the first portion 211 of one mat 200 occupies all of the first region 241 of another mat, the perimeter of the first portion 211 of one mat 200 overlaps with the perimeter of the first region 241 of the other mat, so that a single cutting operation of the sheet of flexible material can obtain both perimeters of the two mats 200, thus increasing the manufacturing speed.

In figure 2C, the mats 200 are meant to extend along direction Y for a length longer than that illustrated. That is, the sheet can have a length in the Y direction which is longer than that illustrated and has been cut for illustration purposes. On the other hand, the sheet can have the illustrated boundaries in the X direction. In this configuration, the sheet has a direction with a longer length, namely direction Y, and the mats 200 are arranged so that their longest length is substantially perpendicular to the direction with the longer length of the sheet.

The present invention is however not limited thereto. In figure 2D, the opposite layout is illustrated. Here the sheet has a direction with a longer length, namely direction Y, and the mats 200 are arranged so that their longest length is substantially aligned with the direction with the longer length of the sheet. Also with this arrangement, the waste material W is lower than in the prior art.

In the description above, the first region 241 and the first portion 211 have been described to substantially, or completely, complementing each other. It is clear to those skilled in the art that various geometrical configurations can achieve this and not only the one illustrated in the figures. In the following description, more details will be provided on a possible way to obtain such complementarity, with reference to figure 2E.

As visible in figure 2E, in some embodiments, the channel 230 connects the first bladder 210 and the second bladder 220 bladder along a longitudinal direction X. This longitudinal direction can be the direction of longest extension of the mat 200. A direction Y can be defined as being perpendicular to this longitudinal direction X. The channel 230 can then extend between a channel top end 230T and a channel bottom end 230B, along direction Y. Similarly, the mat 200 can extend between a mat top end 200T and a mat bottom end 200B, along the direction Y. In some embodiments, the channel bottom end 230B can be understood as being the lowest point, in the Y direction, of the channel 230. Similarly, the channel top end 230T can be understood as being the highest point, in the Y direction, of the channel 230. Alternatively, or in addition, in some embodiments, the channel bottom end 230B can be understood as being the bottom perimeter, in the Y direction, of the channel 230. Similarly, the channel top end 230T can be understood as being the top perimeter, in the Y direction, of the channel 230.

As visible by the shaded areas in figure 2E, the first region 241 can then be an empty area comprised between the channel top end 230T and the mat top end 200T, along the direction Y. More specifically, the region 241 can be the empty area comprised between the first pneumatic bladder 210 and the second pneumatic bladder 220, along the longitudinal direction X. In yet other words, the first pneumatic bladder 210 and the second pneumatic bladder 220 can be defined by an external perimeter, and the first region can be defined by the parts of those perimeters facing each other in the space comprised between the channel top end 230T and the mat top end 200T.

In some embodiments, as illustrated in figure 2E, the first portion 211 can be a part of the first pneumatic bladder 210 comprised between the channel top end 230T and the mat top end 200T. Alternatively, or in addition, the first portion 211 can be a part of the first pneumatic bladder 210 comprised between a portion of maximum extension of the first pneumatic bladder 210 in the X direction, and the channel top end 230T. In case the portion of maximum extension of the first pneumatic bladder 210 extends along the direction Y, thus being a region of maximum extension, the portion of maximum extension can be defined as the part of the region of maximum extension closest to the mat top end 200T.

Moreover, in some embodiments, an area of the first region 241 is substantially superimposable with an area of the first portion 211, when rotated by 180°. The term substantially superimposable can be understood as follows. As illustrated in figures 2A-2E the first region 241 can be completely complementing the first portion 211. However, is it will be clear that the invention is not limited to such complete complementarity and a lower complementarity can be implemented as well. This could be due, for instance, to manufacturing necessity or other considerations. Even with a reduced complementarity, as long as the first portion 211 has a shape such that a large part of the first region 241 is complemented, the waste material W can be reduced. In preferred embodiments, the first portion 211 occupies at least 80%, preferably at least 90%, even more preferably at least 95% of the area of the first region 241. Alternatively, on in addition, perimeter of the first portion and of the first region 241 are substantially overlapping, or substantially parallel, in the concave part of the first region 241.

In the description of figures 2A-2E, the description has been specifically directed to the top part of the mat 200, with reference to the orientation illustrated in figure 2A, which is also the preferred orientation for deployment of the mat 200 in the backrest portion of a seat. It will be clear that the bottom part of the mat 200 can be implemented with any shape.

In the following, the opposite will apply and embodiments of the mat 300 will be described with regards to the bottom part of the mat 300 and with reference to figures 3A-3B. Also in this case, it will be clear that the top part can be implemented with any shape. It will nevertheless be clear to those skilled in the art that the top part of mat 200 can be advantageously combined with the bottom part of the mat 300, as illustrated in figures 2A-2E and 3A-3B.

As visible in figure 3A, a second region 342 between the first pneumatic bladder 210 and the second pneumatic bladder 210 has a shape substantially corresponding to a second portion 312 of the first pneumatic bladder 210.

In general, all considerations previously made for the first portion 211 and the first region 241 can be applied to the second portion 312 and to the second region 342, with the due modifications considering that the second portion 312 and to the second region 342 are positioned on the bottom part of the mat 300 instead of the top part of the mat 200.

Thus, for instance, as previously described and as visible in figure 3B, the channel 230 extends between a channel top end 230T and a channel bottom end 230. The second region 342 can be defined as an area comprised between the channel bottom end 230B and the mat bottom end 200B, along the direction Y, and comprised between the first pneumatic bladder 210 and the second pneumatic bladder 220, along the longitudinal direction X. Similarly, the second portion 312 can be defined as a part of the first pneumatic bladder 210 comprised between the channel bottom end 230B and the mat bottom end 200B.

In some embodiments, an area of the second region 342 can be substantially superimposable with an area of the second portion 312, when rotated by 180°. Also in this case, the considerations previously made for the first portion 211 and the first region 241 can be applied to the second portion 312 and to the second region 342.

In the description of figures 2A-3B, the description has been specifically directed to how a part of the mat 200, 300 can be substantially complementary to an empty region defined by the bladder, thus resulting in less waste material W and possibly in a faster bonding and/or cutting of the flexible sheet if the perimeters of the portions and regions overlap. As schematically illustrated in figures 2C and 2D, a plurality of mats 200, 300 can be placed next to each other on a single row. This leads to empty spaces being present between two neighboring mats 200, 300, both on the top and bottom parts of the mats. Those empty spaces can be considered as being analogous to the first and second regions 241, 342. Analogously to the previous description, those empty spaces can be substantially complementary with portions of the second bladder 220.

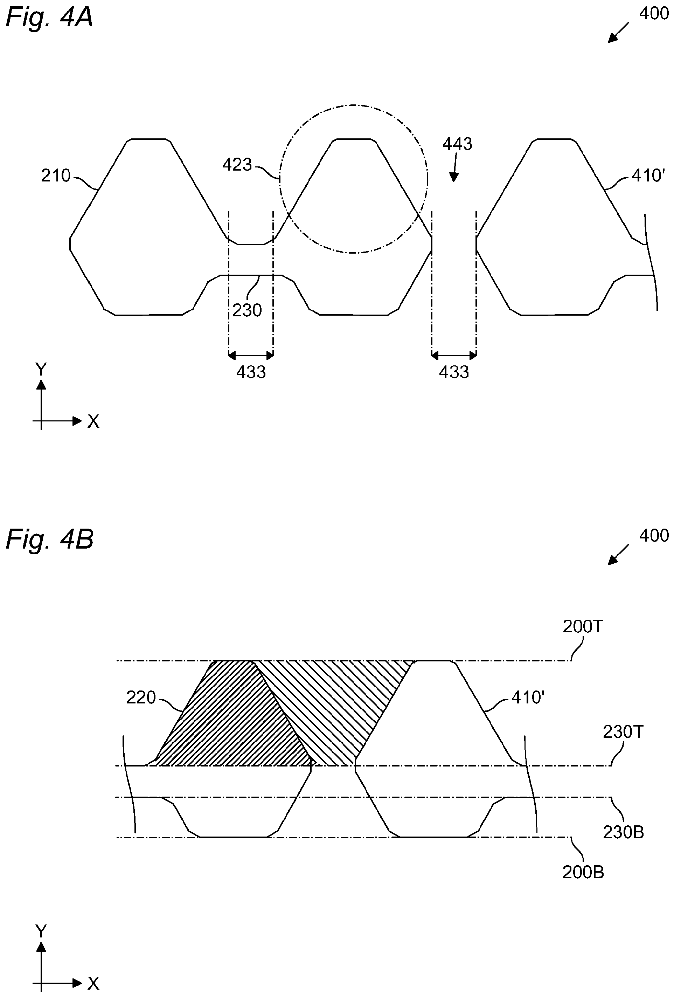

In particular, as visible in figure 4A, the channel 230 connects the first bladder 210 and the second bladder 220 substantially along direction X. The channel 230 has, in particular, a channel length 233 along the direction X as visible in figure 4A.

A third region 443 can then be defined between the second pneumatic bladder 210 and an hypothetical additional first pneumatic bladder 410'. As visible in figure 4A, the additional first pneumatic bladder 410' can correspond to the first pneumatic bladder 210 and can be hypothetically placed at a distance, from the second bladder 220 and along the direction X, corresponding to the channel length 233. It will be clear to those skilled in the art that in some embodiments of the invention, for instance during manufacturing, the additional first pneumatic bladder 410' may in fact be physically present and not only hypothetical. It is however clear that in other embodiments, and for instance during deployment of a single pneumatic mat 400, no other mats can be deployed hence the definition of the first pneumatic bladder 410' as being potentially hypothetical.

The third region 443 as defined above can have a shape substantially corresponding to a third portion 423 of the second pneumatic bladder 220.

In general, all considerations previously made for the first portion 211 and the first region 241 can be applied to the third portion 423 and to the third region 443, with the due modifications considering that the second bladder 220 and the additional first pneumatic bladder 410' belong to two different pneumatic mats.

Thus, for instance as illustrated in figure 4B, the third region 443 can be defined an area comprised between the channel bottom end 230B and the mat bottom end 200B, along the direction Y, and comprised between the second pneumatic bladder 220 and the additional first pneumatic bladder 410', along the longitudinal direction X.

Moreover, in a manner analogous to the previous description of the first portion 211 and the first region 241, the third portion 423 can be a part of the second pneumatic bladder 220 comprised between the channel bottom end 230B and the mat bottom end 200B. Additionally, in an analogous manner to the previous description, an area of the third region 443 can be substantially superimposable with an area of the third portion 423, when rotated by 180°.

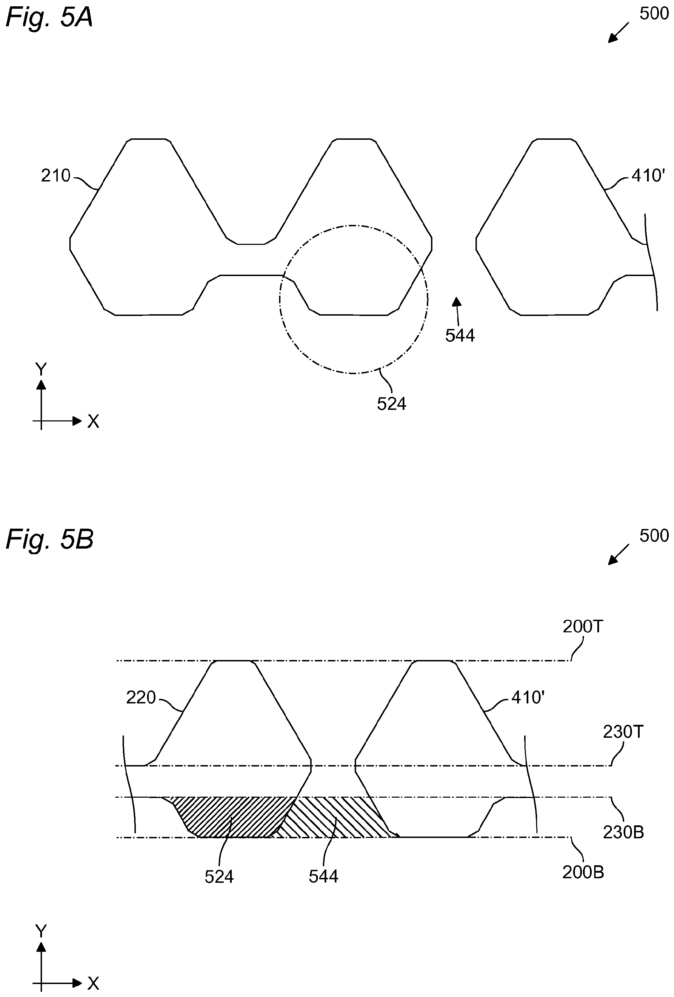

In the description of figures 4A-4B, the description has been specifically directed to the top part of the mat 200, with reference to the orientation illustrated in figure 4A, in a manner analogous to the description of figures 2A-2E. As for the previous description of figures 3A-3B, figures embodiments of the mat 500 will be described with regards to the bottom part of the mat 500 and with reference to figures 5A-5B. It will be clear that the relevant features for any of the described embodiments can be combined at will.

As visible in figure 5A and as previously described for figure 4A, the channel 230 connects the first bladder 210 and the second 220 bladder along direction X, and has a channel length 233.

A fourth region 544 can be defined between the second pneumatic bladder 210 and an hypothetical additional first pneumatic bladder 410' in a manner similar to the third region 443, with the difference that the fourth region 544 is in the bottom part of the mat 500. Similarly, a fourth portion 524 can be defined in the bottom part of the bladder 210 such that the fourth region 544 has a shape substantially corresponding to the fourth portion 524 of the second pneumatic bladder 220.

In general, all considerations previously made for the second portion 312 and the second region 342 can be applied to the fourth portion 524 and to the fourth region 544, with the due modifications considering that the second bladder 220 and the additional first pneumatic bladder 410' belong to two different pneumatic mats.

In particular, as previously described, the channel 230 extends between a channel top end 230T and a channel bottom end 230B. As visible in figure 5B, the fourth region 544 can be defined as an area comprised between the channel bottom end 230B and the mat bottom end 200B, along the direction Y, and comprised between the second pneumatic bladder 220 and the additional first pneumatic bladder 410', along the direction X.

As also visible in figure 5B, the fourth portion 524 can be a part of the first pneumatic bladder 210 comprised between the channel bottom end 230B and the mat bottom end 200B. In some embodiments, as previously described in an analogous manner for the mats 200, 300 and 400, an area of the fourth region 544 can be substantially superimposable with an area of the fourth portion 524, when rotated by 180°.

As will be understood by the skilled person, the bladders can have a plurality of shapes which meet the description above. In some preferred embodiments, as illustrated, each of the first pneumatic bladder 210 and of the second pneumatic bladder 220 can have a substantially hexagonal shape. A substantially hexagonal shape can be defined as a shape of the bladder which differs at most for 20%, preferably at most for 10% of its area with respect to an area of a hexagon which is best fitting the bladder.

In the embodiments described above, the shapes illustrated in figures 2A-5B have been understood as being the shape of the lower sheet of material of the mat, or the shape of the higher sheet of material of the mat, which can be bound to the lower sheet of material of the mat to implement the mat, or the shape of the mat. While no inlet and outlet connections to the mats have been shown, the skilled person is aware that one or more inlet and/or outlet port can be implemented to appropriately inflate and/or deflate the pneumatic mat.

Moreover, the mat has been understood as being inflatable for the entire volume illustrated by the lines in figures 2A-5B. The present invention is however not limited thereto.

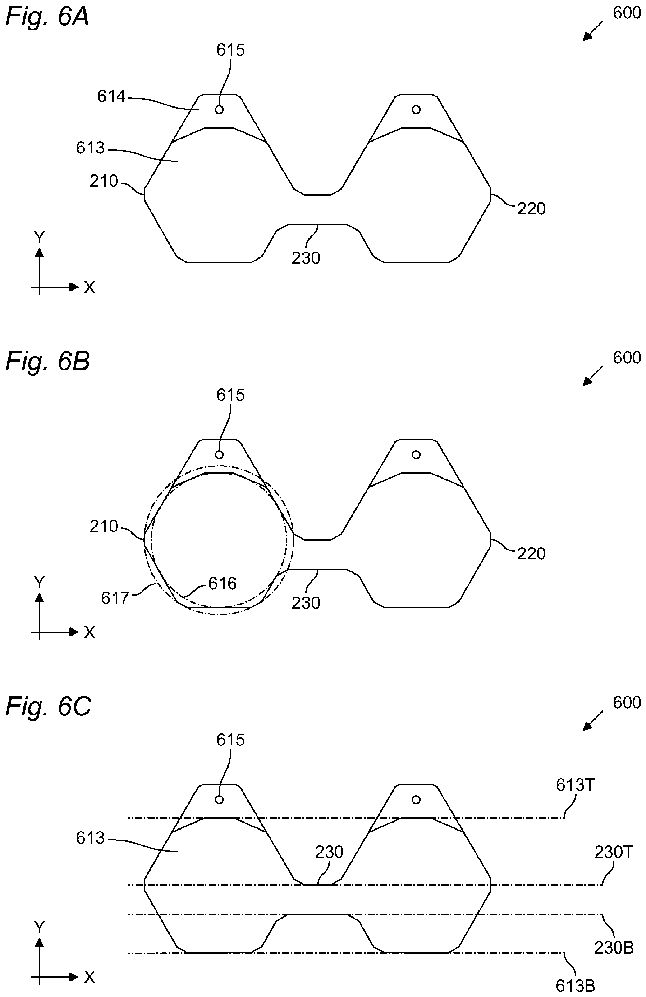

In particular, as visible in figure 6A, the first pneumatic bladder 210 and/or the second pneumatic bladder 220 can comprise an inflatable portion 613, which is connected to the channel 230, so that the bladders can be in pneumatic connections. This is particularly advantageous since it ensures that the two bladders 210, 220, can be inflated and/or deflated together.

At the same time, the first pneumatic bladder 210 and/or the second pneumatic bladder 220 can comprise a hanging portion 614. The purpose of the hanging portion 614 is to provide a mechanical support for hanging the pneumatic mat to a respective hanging structure in the seat. This can be achieved by the provision of appropriate hanging means 615. In the illustrated embodiment, the hanging means 615 are implemented by holes in the sheet of flexible material. In preferred embodiments, the hanging portion 614 is not connected to the channel 230. That is, in preferred embodiments, the hanging portion 614 is not inflated when the pneumatic mat is inflated, and/or the hanging portion 614 is not deflated when the pneumatic mat is deflated.

As it will be clear to those skilled in the art, the hanging portion 614 can be implemented by both upper and lower sheets of flexible material. Alternatively, the hanging portion 614 can be implemented by only one of the upper and lower sheets of flexible material, while both sheets are bonded to each other to implement the inflatable portion 613.

Preferably, the hanging portion 614 is higher, along the Y direction, than the inflatable portion 613. This ensures that the mat can be hang in a reliable manner.

As visible in figure 6B, in preferred embodiments, the inflatable portion 613 inscribes an inscribed circle 616 and escribe an escribed circle 617. As it is visible from the figure, the inscribed circle 616 and the escribed circle 617 can be rather close to each other. That means that the shape of the inflatable portion 613 can be approximated by the shape of a circle. In particular, in preferred embodiments, a difference in radius between the inscribed circle 616 and the escribed circle 617, with respect to the radius of the escribed circle 617 can be lower than 20%, preferably lower than 15%. In preferred embodiments, the inscribed circle 616 and the escribed circle 617 can have the same centre.

Alternatively, or in addition, in some preferred embodiments, as illustrated, the inflatable portion 613 of each of the first pneumatic bladder 210 and/or of the second pneumatic bladder 220 can have a substantially circular shape. A substantially circular shape can be defined as a shape of the inflatable portion 613 which differs at most for 30%, preferably at most for 20% of its area with respect to an area of a circle which is best fitting the inflatable portion 613.

This shape of the inflatable portion 613 is particular advantageous, since shapes with sharper angles, that is a perimeter of the inflatable portion 613 with internal angles closer to 90 degrees, such as for instance a square or a rectangle, are not ideal when inflated. In particular, for a given amount of flexible material implementing the inflatable portion 613, if the inflatable portion 613 is shaped like a circle it will inflate more thick than if shaped like a square, or a rectangle. As the number of sides of the inflatable portion 613 increases, and as the inflatable portion 613 gets closer to a circle, the amount of thickness which can be achieved when inflated, by given area of flexible material, advantageously increases. Hence, the shape of the inflatable portion 613 makes an efficient use of the material in achieving a higher thickness than the shape of the prior art of figure 1, for a given amount of material.

In the embodiments described above, the channel 230 has been described as connecting the first and second bladder and as being placed in between them along the X direction. For what concerns the placement of the channel in the Y direction, it is clear that the channel 230 could be implemented at any height along the Y direction.

In preferred embodiments, as illustrated in figure 6C, the channel 230 connects the first bladder 210 and the second bladder 220 along direction X and, along direction Y, the channel 230 extends between a channel top end 230T and a channel bottom end 230B, as previously described. Preferably, the inflatable portion 613 extends between an inflatable portion top end 613T and an inflatable portion bottom end 613B, along the direction Y, as visible in figure 6C. In this configuration, the channel 230 extension along the direction Y can preferably overlap a middle point between the inflatable portion top end 613T and the inflatable portion bottom end 613B. Alternatively, or in addition, the channel 230 extension along the direction Y can preferably overlap a middle point between the mat top end 200T and the mat bottom end 200B.

In other word, the channel 230 can be placed at a value Y which is substantially in the middle of the vertical extension of the inflatable portion 613, and/or of the vertical extension of the mat. One advantage of doing so is that the length of the channel 230 can be reduced, compared to other possible placements. Moreover, by doing so, the mat has less of a tendency to deform when inflated, with respect to the deflated shape.

Moreover, in the embodiments described above, no specific limitation to the size of the channel 230 in the Y direction has been described.

In preferred embodiments, the channel 230 can have a size, along direction Y, which is less than the size of the inflatable portion 613, and/or which is less than the size of the bladders 210, 220.

In particular, as illustrated in figure 6C, the inflatable portion 613 can extend between an inflatable portion top end 613T and an inflatable portion bottom end 613B, along the direction Y. A distance between the channel top end 230T and the channel bottom end 230B can then be less than 35%, preferably less than 30%, even more preferably less than 25% than a distance between the inflatable portion top end 613T and the inflatable portion bottom end 613B. Alternatively, or in addition, the distance between the channel top end 230T and the channel bottom end 230B can then be less than 35%, preferably less than 30%, even more preferably less than 25% than a distance between the mat top end 200T and the mat bottom end 200B.

This reduced size of the channel, compared to the size of the inflatable region and/or of the bladders, ensures that the channel 230 will inflate less thick than the inflatable region and/or than the bladders, so that the thickness of the mat in its central region is less than in its two peripheral regions. This is particularly advantageous, for instance, when the mat is used as rest support, so that the central region, which could correspond to a placement under the spine of the user, is advantageously putting less pressure on the spine.

The embodiments described above relate to the mat as a device. Further embodiments of the invention also relate to the manufacturing of the one or more mats described above. The skilled person will be aware of several possible manufacturing method for obtaining the mats as described, and in particular in their staggered configuration illustrated in figures 2C and 2D. In the following, some exemplary methods will be described.

In particular, a manufacturing method for pneumatic mats 200-600 can comprise a step of positioning a first sheet of flexible material above a second sheet of flexible material, and bonding the first and second sheets of flexible material so as to obtain even rows R2, R4, R6 of pneumatic mats 200-600 and odd rows R1, R3, R5 of pneumatic mats 200-600. In some preferred embodiments, the first sheet of flexible material and the second sheet of flexible material can be cut, at least partially, to implement the perimeters of the mats 200-600 prior to the bonding.

As illustrated in figures 2C and 2D, the pneumatic mats 200-600 in the even rows R2, R4, R6 are preferably staggered with the pneumatic mats 200-600 in the odd rows R1, R3, R5. More specifically, the pneumatic mats 200-600 in the even rows R2, R4, R6 can be rotated by 180 degrees with the pneumatic mats 200-600 in the odd rows R1, R3, R5. In addition, pneumatic mats 200-600 in the even rows R2, R4, R6 can be shifted, along the row direction, by a distance corresponding substantially to half of the pitch of the mats 200-600 in the odd rows R1, R3, R5.

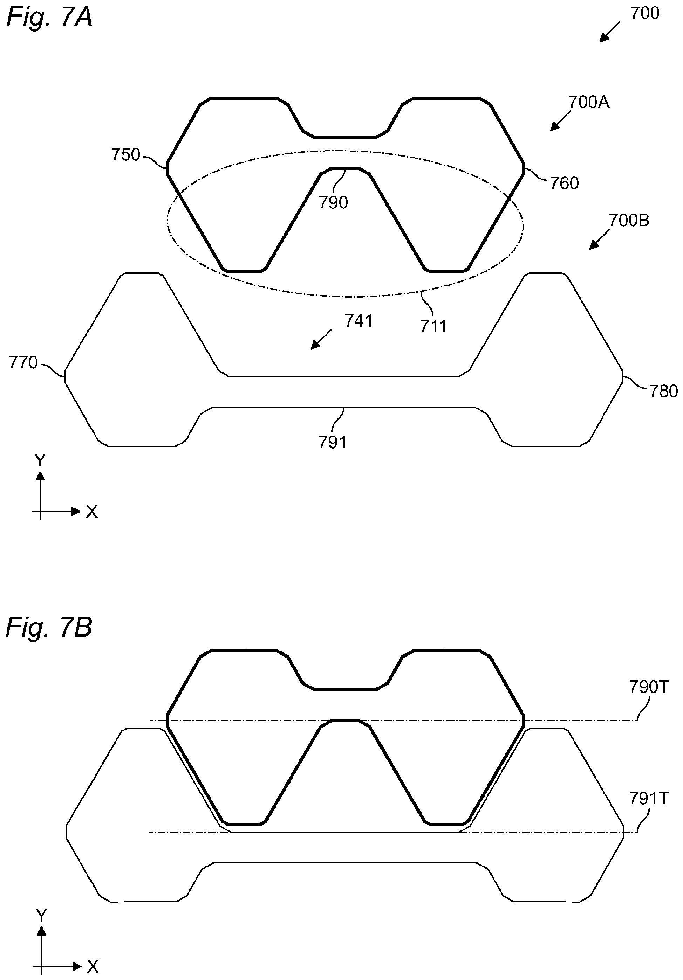

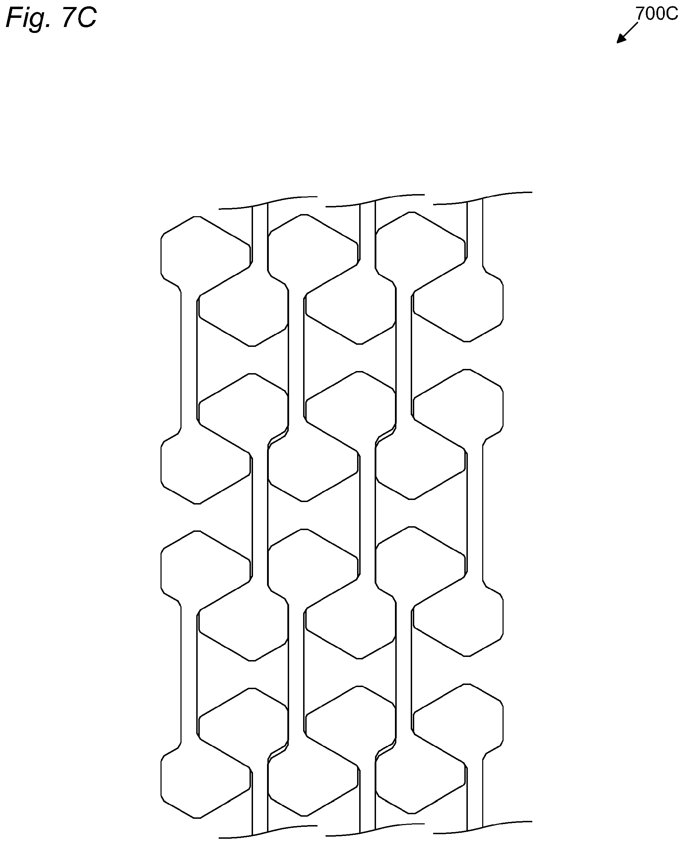

Figure 7A and 7B schematically illustrate a pneumatic mat arrangement 700. Figure 7C schematically illustrates a flexible sheet 700C comprising a plurality of pneumatic mats 700B.

Pneumatic mat arrangement 700 comprises four bladders 750-780. Bladders 750 and 760 are connected to each other to form a first pneumatic mat 700A, through a channel 790. Bladders 770 and 780 are connected to each other to form a second pneumatic mat 700B, through a channel 791. In figure 7A, the two pneumatic mats are illustrated as being separated from each other, for clarity of illustration. In figure 7B they are illustrated in a possible final implementation. Preferably, in some embodiments, also in the position of figure 7B, the mats 700A and 700B have been manufactured separately and are only positioned and/or bound next to each other after manufacturing.

The considerations previously made concerning the shape of any bladder previously described can also apply to any of the bladders 750-780. Generally, the pneumatic mat arrangement 700 differs from the previously described pneumatic mats, in that the first pneumatic mat 700A and the second pneumatic mat 700B have a respective channel with different length.

In particular, the second pneumatic mat 700B can have a channel 791 with a length such that the region 741 between the pneumatic bladder 770 and the pneumatic bladder 780 can comprise at least a portion of the first pneumatic mat 700B. Preferably, the portion 711 of the pneumatic mat 700B above the channel top end 790T, visible in figure 7B. Even more preferably, the region 741 can have a shape substantially corresponding to the portion 711 of the first pneumatic mat 700B above the channel top end 790T.

The region 741 can be defined in a manner similar as to the first region in any of the previous embodiments, such as, for instance, first region 241. Similarly, the portion 711 can be defined in a manner similar to the first portion in any of the previous embodiments, such as, for instance, first portion 211, except that in this case the first portion 711 comprises the first portion of both bladders 750 and 760, instead of the first portion of a single bladder.

In preferred implementations, the first pneumatic mat 700A can be configured in manner substantially similar to any of the previously discussed pneumatic mats. In this manner, it is evident that for the first pneumatic mat 700A, all advantages previously described can be achieved also in the pneumatic mat arrangement 700.

As for the second pneumatic mat 700B, it can be configured in manner substantially similar to any of the previously discussed pneumatic mats, except that the channel 791 is longer. In particular, in some embodiments, the channel 791 can be configured so that the region 741 can contain two first portions of respective bladders 770 and 780, instead of only one, as previously described. This can lead to an advantageous manufacturing of the second pneumatic mat 700B, in a manner similar as previously described, as it can be seen in figure 7C.

Similar considerations as made above for the second region and second portion, the third region and third portion, the fourth region and the fourth portion can also apply to the mats700A and 700B of pneumatic mat arrangement 700.

In particular, for mat 700A, all previously considerations apply directly. For mat 700B, the second region is formed to contain two second portions, in a manner analogous to what has already been described for the first region and the first portion.

In all embodiments above, the expression rotated by 180 degrees can be replaced by rotated by at least 160 degrees and at most 200 degrees, preferably at least 170 degrees and at most 190 degrees, even more preferably at least 175 degrees and at most 185 degrees.

It has thus been described how the shape of the pneumatic mat can be improved so as to make a more efficient use of the flexible material which is used for implementing the pneumatic mat. Although a plurality of embodiments have been described, it will be clear to those skilled in the art that alternative embodiments, within the meaning of the claims, can be obtained by combing any two or more feature from any of the embodiments illustrated or described.

### List of reference numerals

100A: pneumatic mat
110: first bladder
120: second bladder
130: channel
100B: flexible sheet
W: waste material
200: pneumatic mat
200T: mat top end
200B: mat bottom end
200C: flexible sheet
210: first bladder
211: first portion
220: second bladder
230: channel
230T: channel top end
230B: channel bottom end
241: first region
R1-R6: rows
300: pneumatic mat
312: second portion
342: second region
400: pneumatic mat
410': additional first bladder
423: third portion
434: channel length
443: third region
500: pneumatic mat
524: fourth portion
544: fourth region
600: pneumatic mat
613: inflatable portion
613T: inflatable portion top end
613B: inflatable portion bottom end
614: hanging portion
615: hanging means
616: inscribed circle
617: escribed circle
700: pneumatic mat arrangement
750: first bladder
760: second bladder
770: third bladder
780: fourth bladder
790, 791: channel
790T, 791T: channel top end

## Claims

1. A pneumatic mat (200, 300, 400, 500, 600) comprising
a first pneumatic bladder (210),
a second pneumatic bladder (220), and
a channel (230) connecting the first pneumatic bladder (210) and the second pneumatic bladder (220),
wherein a first region (241) between the first pneumatic bladder (210) and the second pneumatic bladder (220) has a shape substantially corresponding to a first portion (211) of the first pneumatic bladder (210),
**characterized in that**
the first pneumatic bladder (210) and/or the second pneumatic bladder (220) comprise
an inflatable portion (613), connected to the channel (230), and
an hanging portion (614), not connected to the channel (230), comprising hanging means (615) for hanging the pneumatic mat (600) to a seat frame
wherein
each of the first pneumatic bladder (210) and of the second pneumatic bladder (220) has a substantially hexagonal shape.

2. The pneumatic mat (200, 300, 400, 500, 600) according to claim 1, wherein
the channel (230) connects the first (210) and second (220) bladder along a longitudinal direction (X) and, along a direction (Y) perpendicular to the longitudinal direction (X), the channel (230) extends between a channel top end (230T) and a channel bottom end (230B),
the mat (200, 300, 400, 500, 600) extends between a mat top end (200T) and a mat bottom end (200B), along the direction (Y) perpendicular to the longitudinal direction (X), and
the first region (241) is an area comprised between the channel top end (230T) and the mat top end (200T), along the direction (Y) perpendicular to the longitudinal direction (X), and comprised between the first pneumatic bladder (210) and the second pneumatic bladder (220), along the longitudinal direction (X).

3. The pneumatic mat (200, 300, 400, 500, 600) according to claim 2, wherein
the first portion (211) is a part of the first pneumatic bladder (210) comprised between the channel top end (230T) and the mat top end (200T).

4. The pneumatic mat (200, 300, 400, 500, 600) according to any previous claim, wherein
an area of the first region (241) is substantially superimposable with an area of the first portion (211) rotated by 180°.

5. The pneumatic mat (300) according to any previous claim, wherein
a second region (342) between the first pneumatic bladder (210) and the second pneumatic bladder (210) has a shape substantially corresponding to a second portion (312) of the first pneumatic bladder (210).

6. The pneumatic mat (300) according to claim 5, wherein
the channel (230) connects the first (210) and second (220) bladder along a longitudinal direction (X) and, along a direction (Y) perpendicular to the longitudinal direction (X), the channel (230) extends between a channel top end (230T) and a channel bottom end (230B),
the second region (342) is an area comprised between the channel bottom end (230B) and the mat bottom end (200B), along the direction (Y) perpendicular to the longitudinal direction (X), and comprised between the first pneumatic bladder (210) and the second pneumatic bladder (220), along the longitudinal direction (X).

7. The pneumatic mat (300) according to claim 6, wherein
the second portion (312) is a part of the first pneumatic bladder (210) comprised between the channel bottom end (230B) and the mat bottom end (200B).

8. The pneumatic mat (300) according to any of claims 5 to 7, wherein
an area of the second region (342) is substantially superimposable with an area of the second portion (312) rotated by 180°.

9. The pneumatic mat (400) according to any previous claim, wherein
the channel (230) connects the first (210) and second (220) bladder along a longitudinal direction (X),
the channel (230) has a channel length (233) along the longitudinal direction (X),
a third region (443) is defined between the second pneumatic bladder (210) and an hypothetical additional first pneumatic bladder (410'), the additional first pneumatic bladder (410') corresponding to the first pneumatic bladder (210) and being hypothetically placed at a distance, from the second bladder (220) and along the longitudinal direction (X), corresponding to the channel length (233),
the third region (443) has a shape substantially corresponding to a third portion (423) of the second pneumatic bladder (220).

10. The pneumatic mat (400) according to claim 9, wherein
the third region (443) is an area comprised between the channel bottom end (230B) and the mat bottom end (200B), along the direction (Y) perpendicular to the longitudinal direction (X), and comprised between the second pneumatic bladder (220) and the additional first pneumatic bladder (410'), along the longitudinal direction (X).

11. The pneumatic mat (400) according to claim 9 or 10, wherein
the third portion (423) is a part of the second pneumatic bladder (220) comprised between the channel bottom end (230B) and the mat bottom end (200B).

12. The pneumatic mat (400) according to any of claims 9 to 11, wherein
an area of the third region (443) is substantially superimposable with an area of the third portion (423) rotated by 180°.

13. The pneumatic mat (400) according to any previous claim, wherein
the channel (230) connects the first (210) and second (220) bladder along a longitudinal direction (X),
the channel (230) has a channel length (233) along the longitudinal direction (X),
a fourth region (544) is defined between the second pneumatic bladder (210) and an hypothetical additional first pneumatic bladder (410'), the additional first pneumatic bladder (410') corresponding to the first pneumatic bladder (410') and being hypothetically placed at a distance, from the second bladder (220) and along the longitudinal direction (X), corresponding to the channel length (233),
the fourth region (544) has a shape substantially corresponding to a fourth portion (524) of the second pneumatic bladder (220).

14. The pneumatic mat (400) according to claim 13, wherein
the channel (230) connects the first (210) and second (220) bladder along a longitudinal direction (X) and, along a direction (Y) perpendicular to the longitudinal direction (X), the channel (230) extends between a channel top end (230T) and a channel bottom end (230B),
the fourth region (544) is an area comprised between the channel bottom end (230B) and the mat bottom end (200B), along the direction (Y) perpendicular to the longitudinal direction (X), and comprised between the second pneumatic bladder (220) and the additional first pneumatic bladder (410'), along the longitudinal direction (X).

15. The pneumatic mat (400) according to claim 14, wherein
the fourth portion (524) is a part of the first pneumatic bladder (210) comprised between the channel bottom end (230B) and the mat bottom end (200B).

16. The pneumatic mat (400) according to any of claims 13 to 15, wherein
an area of the fourth region (544) is substantially superimposable with an area of the fourth portion (524) rotated by 180°.

17. The pneumatic mat (600) according to claim 1, wherein
the inflatable portion (613) inscribes an inscribed circle (616) and escribe an escribed circle (617), and
a difference in radius between the inscribed circle (616) and the escribed circle (617), with respect to the radius of the escribed circle (617) is lower than 20%, preferably lower than 15%.

18. The pneumatic mat (600) according to claim 17, wherein
the inscribed circle (616) and the escribed circle (617) have the same centre.

19. The pneumatic mat (600) according to any of claims 1 to 18, wherein
the channel (230) connects the first (210) and second (220) bladder along a longitudinal direction (X) and, along a direction (Y) perpendicular to the longitudinal direction (X), the channel (230) extends between a channel top end (230T) and a channel bottom end (230B),
the inflatable portion (613) extends between an inflatable portion top end (613T) and an inflatable portion bottom end (613B), along the direction (Y) perpendicular to the longitudinal direction (X), and
the channel (230) extension along the direction (Y) perpendicular to the longitudinal direction (X) overlaps a middle point between the inflatable portion top end (613T) and the inflatable portion bottom end (613B).

20. The pneumatic mat (600) according to any of claims 1 to 19, wherein
the channel (230) connects the first (210) and second (220) bladder along a longitudinal direction (X) and, along a direction (Y) perpendicular to the longitudinal direction (X), the channel (230) extends between a channel top end (230T) and a channel bottom end (230B),
the inflatable portion (613) extends between an inflatable portion top end (613T) and an inflatable portion bottom end (613B), along the direction (Y) perpendicular to the longitudinal direction (X), and
a distance between the channel top end (230T) and the channel bottom end (230B) is less than 35%, preferably less than 30%, even more preferably less than 25% than a distance between the inflatable portion top end (613T) and the inflatable portion bottom end (613B).

21. A manufacturing method for pneumatic bladders (200, 300, 400, 500, 600) according to any previous claim, comprising the steps of
positioning a first sheet of flexible material above a second sheet of flexible material,
bonding the first and second sheets of flexible material so as to obtain even rows (R2, R4, R6) of pneumatic bladders (200, 300, 400, 500, 600) and odd rows (R1, R3, R5) of pneumatic bladders (200, 300, 400, 500, 600),
**characterized in that**
the pneumatic mats (200, 300, 400, 500, 600) in the even rows (R2, R4, R6) are staggered with the pneumatic mats (200, 300, 400, 500, 600) in the odd rows (R1, R3, R5).

22. The manufacturing method according to claim 21, wherein
the pneumatic mats (200, 300, 400, 500, 600) in the even rows (R2, R4, R6) are rotated by 180° with respect to the pneumatic mats (200, 300, 400, 500, 600) in the odd rows (R1, R3, R5).

## Patentansprüche

1. Pneumatische Matte (200, 300, 400, 500, 600), umfassend
eine erste pneumatische Blase (210),
eine zweite pneumatische Blase (220), und
einen Kanal (230), der die erste pneumatische Blase (210) und die zweite pneumatische Blase (220) verbindet,
wobei ein erster Bereich (241) zwischen der ersten pneumatischen Blase (210) und der zweiten pneumatischen Blase (220) eine Form aufweist, die im Wesentlichen einem ersten Abschnitt (211) der ersten pneumatischen Blase (210) entspricht,
**dadurch gekennzeichnet, dass**
die erste pneumatische Blase (210) und/oder die zweite pneumatische Blase (220) umfassen
einen aufblasbaren Abschnitt (613), der mit dem Kanal (230) verbunden ist, und
einen nicht mit dem Kanal (230) verbundenen Aufhängeabschnitt (614) mit Aufhängemitteln (615) zum Aufhängen der pneumatischen Matte (600) an einem Sitzgestell
wobei
jede der ersten pneumatischen Blase (210) und der zweiten pneumatischen Blase (220) eine im Wesentlichen sechseckige Form aufweist.

2. Pneumatische Matte (200, 300, 400, 500, 600) nach Anspruch 1, wobei
der Kanal (230) die erste (210) und zweite (220) Blase entlang einer Längsrichtung (X) verbindet und sich der Kanal (230) entlang einer Richtung (Y) senkrecht zur Längsrichtung (X) zwischen einem Kanaloberende (230T) und einem Kanalunterende (230B) erstreckt,
sich die Matte (200, 300, 400, 500, 600) zwischen einem Mattenoberende (200T) und einem Mattenunterende (200B) entlang der Richtung (Y) senkrecht zur Längsrichtung (X) erstreckt, und
der erste Bereich (241) eine Fläche ist, die zwischen dem Kanaloberende (230T) und dem Mattenoberende (200T) entlang der Richtung (Y) senkrecht zur Längsrichtung (X) enthalten ist und zwischen der ersten pneumatischen Blase (210) und der zweiten pneumatischen Blase (220) entlang der Längsrichtung (X) enthalten ist.

3. Pneumatische Matte (200, 300, 400, 500, 600) nach Anspruch 2, wobei
der erste Abschnitt (211) ein Teil der ersten pneumatischen Blase (210) ist, die zwischen dem Kanaloberende (230T) und dem Mattenoberende (200T) enthalten ist.

4. Pneumatische Matte (200, 300, 400, 500, 600) nach einem der vorhergehenden Ansprüche, wobei
eine Fläche des ersten Bereichs (241) im Wesentlichen mit einer um 180° gedrehten Fläche des ersten Abschnitts (211) überlagerbar ist.

5. Pneumatische Matte (300) nach einem der vorhergehenden Ansprüche, wobei ein zweiter Bereich (342) zwischen der ersten pneumatischen Blase (210) und der zweiten pneumatischen Blase (210) eine Form aufweist, die im Wesentlichen einem zweiten Abschnitt (312) der ersten pneumatischen Blase (210) entspricht.

6. Pneumatische Matte (300) nach Anspruch 5, wobei
der Kanal (230) die erste (210) und zweite (220) Blase entlang einer Längsrichtung (X) verbindet und sich der Kanal (230) entlang einer Richtung (Y) senkrecht zur Längsrichtung (X) zwischen einem Kanaloberende (230T) und einem Kanalunterende (230B) erstreckt,
der zweite Bereich (342) eine Fläche ist, die zwischen dem Kanalunterende (230B) und dem Mattenunterende (200B) entlang der Richtung (Y) senkrecht zur Längsrichtung (X) enthalten ist und zwischen der ersten pneumatischen Blase (210) und der zweiten pneumatischen Blase (220) entlang der Längsrichtung (X) enthalten ist.

7. Pneumatische Matte (300) nach Anspruch 6, wobei
der zweite Abschnitt (312) ein Teil der ersten pneumatischen Blase (210) ist, die zwischen dem Kanalunterende (230B) und dem Mattenunterende (200B) enthalten ist.

8. Pneumatische Matte (300) nach einem der Ansprüche 5 bis 7, wobei
eine Fläche des zweiten Bereichs (342) im Wesentlichen mit einer um 180° gedrehten Fläche des zweiten Abschnitts (312) überlagerbar ist.

9. Pneumatische Matte (400) nach einem der vorhergehenden Ansprüche, wobei der Kanal (230) die erste (210) und zweite (220) Blase entlang einer Längsrichtung (X) verbindet,
der Kanal (230) eine Kanallänge (233) entlang der Längsrichtung (X) aufweist,
ein dritter Bereich (443) zwischen der zweiten pneumatischen Blase (210) und einer hypothetischen zusätzlichen ersten pneumatischen Blase (410') definiert ist, wobei die zusätzliche erste pneumatische Blase (410') der ersten pneumatischen Blase (210) entspricht und hypothetisch in einem Abstand von der zweiten Blase (220) und entlang der Längsrichtung (X) entsprechend der Kanallänge (233) platziert ist,
der dritte Bereich (443) eine Form aufweist, die im Wesentlichen einem dritten Abschnitt (423) der zweiten pneumatischen Blase (220) entspricht.

10. Pneumatische Matte (400) nach Anspruch 9, wobei
der dritte Bereich (443) eine Fläche ist, die zwischen dem Kanalunterende (230B) und dem Mattenunterende (200B) entlang der Richtung (Y) senkrecht zur Längsrichtung (X) enthalten ist und zwischen der zweiten pneumatischen Blase (220) und der zusätzlichen ersten pneumatischen Blase (410') entlang der Längsrichtung (X) enthalten ist.

11. Pneumatische Matte (400) nach Anspruch 9 oder 10, wobei
der dritte Abschnitt (423) ein Teil der zweiten pneumatischen Blase (220) ist, die zwischen dem Kanalunterende (230B) und dem Mattenunterende (200B) enthalten ist.

12. Pneumatische Matte (400) nach einem der Ansprüche 9 bis 11, wobei
eine Fläche des dritten Bereichs (443) im Wesentlichen mit einer um 180° gedrehten Fläche des dritten Abschnitts (423) überlagerbar ist.

13. Pneumatische Matte (400) nach einem der vorhergehenden Ansprüche, wobei der Kanal (230) die erste (210) und zweite (220) Blase entlang einer Längsrichtung (X) verbindet,
der Kanal (230) eine Kanallänge (233) entlang der Längsrichtung (X) aufweist,
ein vierter Bereich (544) zwischen der zweiten pneumatischen Blase (210) und einer hypothetischen zusätzlichen ersten pneumatischen Blase (410') definiert ist, wobei die zusätzliche erste pneumatische Blase (410') der ersten pneumatischen Blase (410') entspricht und hypothetisch in einem Abstand von der zweiten Blase (220) und entlang der Längsrichtung (X) entsprechend der Kanallänge (233) platziert ist,
der vierte Bereich (544) eine Form aufweist, die im Wesentlichen einem vierten Abschnitt (524) der zweiten pneumatischen Blase (220) entspricht.

14. Pneumatische Matte (400) nach Anspruch 13, wobei
der Kanal (230) die erste (210) und zweite (220) Blase entlang einer Längsrichtung (X) verbindet und sich der Kanal (230) entlang einer Richtung (Y) senkrecht zur Längsrichtung (X) zwischen einem Kanaloberende (230T) und einem Kanalunterende (230B) erstreckt,
der vierte Bereich (544) eine Fläche ist, die zwischen dem Kanalunterende (230B) und dem Mattenunterende (200B) entlang der Richtung (Y) senkrecht zur Längsrichtung (X) enthalten ist und zwischen der zweiten pneumatischen Blase (220) und der zusätzlichen ersten pneumatischen Blase (410') entlang der Längsrichtung (X) enthalten ist.

15. Pneumatische Matte (400) nach Anspruch 14, wobei
der vierte Abschnitt (524) ein Teil der ersten pneumatischen Blase (210) ist, die zwischen dem Kanalunterende (230B) und dem Mattenunterende (200B) enthalten ist.

16. Pneumatische Matte (400) nach einem der Ansprüche 13 bis 15, wobei
eine Fläche des vierten Bereichs (544) im Wesentlichen mit einer um 180° gedrehten Fläche des vierten Abschnitts (524) überlagerbar ist.

17. Pneumatische Matte (600) nach Anspruch 1, wobei
der aufblasbare Abschnitt (613) einen Inkreis (616) einschreibt und einen Ankreis (617) ankreist, und
ein Radiusunterschied zwischen dem Inkreis (616) und dem Ankreis (617) in Bezug auf den Radius des Ankreises (617) geringer als 20 %, vorzugsweise geringer als 15
% ist.

18. Pneumatische Matte (600) nach Anspruch 17, wobei
der Inkreis (616) und der Ankreis (617) den gleichen Mittelpunkt aufweisen.

19. Pneumatische Matte (600) nach einem der Ansprüche 1 bis 18, wobei
der Kanal (230) die erste (210) und zweite (220) Blase entlang einer Längsrichtung (X) verbindet und sich der Kanal (230) entlang einer Richtung (Y) senkrecht zur Längsrichtung (X) zwischen einem Kanaloberende (230T) und einem Kanalunterende (230B) erstreckt,
sich der aufblasbare Abschnitt (613) zwischen einem Oberende (613T) des aufblasbaren Abschnitts und einem Unterende (613B) des aufblasbaren Abschnitts entlang der Richtung (Y) senkrecht zur Längsrichtung (X) erstreckt, und
die Erstreckung des Kanals (230) entlang der Richtung (Y) senkrecht zur Längsrichtung (X) einen Mittelpunkt zwischen dem Oberende (613T) des aufblasbaren Abschnitts und dem Unterende (613B) des aufblasbaren Abschnitts überlappt.

20. Pneumatische Matte (600) nach einem der Ansprüche 1 bis 19, wobei
der Kanal (230) die erste (210) und zweite (220) Blase entlang einer Längsrichtung (X) verbindet und sich der Kanal (230) entlang einer Richtung (Y) senkrecht zur Längsrichtung (X) zwischen einem Kanaloberende (230T) und einem Kanalunterende (230B) erstreckt,
sich der aufblasbare Abschnitt (613) zwischen einem Oberende (613T) des aufblasbaren Abschnitts und einem Unterende (613B) des aufblasbaren Abschnitts entlang der Richtung (Y) senkrecht zur Längsrichtung (X) erstreckt, und
ein Abstand zwischen dem Kanaloberende (230T) und dem Kanalunterende (230B) weniger als 35 %, vorzugsweise weniger als 30 %, noch bevorzugter weniger als 25 % als ein Abstand zwischen dem Oberende (613T) des aufblasbaren Abschnitts und dem Unterende (613B) des aufblasbaren Abschnitts ist.

21. Herstellungsverfahren für pneumatische Blasen (200, 300, 400, 500, 600) nach einem der vorhergehenden Ansprüche, umfassend die Schritte
Positionieren einer ersten Folie aus flexiblem Material über einer zweiten Folie aus flexiblem Material,
Kleben der ersten und zweiten Folie aus flexiblem Material, um gerade Reihen (R2, R4, R6) von pneumatischen Blasen (200, 300, 400, 500, 600) und ungerade Reihen (R1, R3, R5) von pneumatischen Blasen (200, 300, 400, 500, 600) zu erhalten, **dadurch gekennzeichnet, dass**
die pneumatischen Matten (200, 300, 400, 500, 600) in den geraden Reihen (R2, R4, R6) mit den pneumatischen Matten (200, 300, 400, 500, 600) in den ungeraden Reihen (R1, R3, R5) versetzt sind.

22. Herstellungsverfahren nach Anspruch 21, wobei
die pneumatischen Matten (200, 300, 400, 500, 600) in den geraden Reihen (R2, R4, R6) gegenüber den pneumatischen Matten (200, 300, 400, 500, 600) in den ungeraden Reihen (R1, R3, R5) um 180° gedreht sind.

## Revendications

1. Tapis pneumatique (200, 300, 400, 500, 600) comprenant
une première vessie pneumatique (210),
une seconde vessie pneumatique (220), et
un canal (230) reliant la première vessie pneumatique (210) et la seconde vessie pneumatique (220),
une première région (241) entre la première vessie pneumatique (210) et la seconde vessie pneumatique (220) ayant une forme correspondant sensiblement à une première partie (211) de la première vessie pneumatique (210),
**caractérisé en ce que**
la première vessie pneumatique (210) et/ou la seconde vessie pneumatique (220) comprennent
une partie gonflable (613), reliée au canal (230), et
une partie de suspension (614), non reliée au canal (230), comprenant un moyen de suspension (615) pour suspendre le tapis pneumatique (600) à un cadre de siège où
la première vessie pneumatique (210) et la seconde vessie pneumatique (220) ont toutes deux une forme sensiblement hexagonale.

2. Tapis pneumatique (200, 300, 400, 500, 600) selon la revendication 1,
le canal (230) reliant la première (210) et la seconde (220) vessie le long d'une direction longitudinale (X) et, le long d'une direction (Y) perpendiculaire à la direction longitudinale (X), le canal (230) s'étendant entre une extrémité supérieure (230T) de canal et une extrémité inférieure (230B) de canal,
le tapis (200, 300, 400, 500, 600) s'étendant entre une extrémité supérieure (200T) de tapis et une extrémité inférieure (200B) de tapis, le long de la direction (Y) perpendiculaire à la direction longitudinale (X), et
la première région (241) étant une zone comprise entre l'extrémité supérieure (230T) du canal et l'extrémité supérieure (200T) du tapis, le long de la direction (Y) perpendiculaire à la direction longitudinale (X), et comprise entre la première vessie pneumatique (210) et la seconde vessie pneumatique (220), le long de la direction longitudinale (X).

3. Tapis pneumatique (200, 300, 400, 500, 600) selon la revendication 2,
la première partie (211) étant une partie de la première vessie pneumatique (210) comprise entre l'extrémité supérieure (230T) du canal et l'extrémité supérieure (200T) du tapis.

4. Tapis pneumatique (200, 300, 400, 500, 600) selon l'une quelconque des revendications précédentes,
une zone de la première région (241) étant sensiblement superposable à une zone de la première partie (211) tournée de 180°.

5. Tapis pneumatique (300) selon l'une quelconque des revendications précédentes,
une deuxième région (342) entre la première vessie pneumatique (210) et la seconde vessie pneumatique (210) ayant une forme correspondant sensiblement à une deuxième partie (312) de la première vessie pneumatique (210).

6. Tapis pneumatique (300) selon la revendication 5,
le canal (230) reliant la première (210) et la seconde (220) vessie le long d'une direction longitudinale (X) et, le long d'une direction (Y) perpendiculaire à la direction longitudinale (X), le canal (230) s'étendant entre une extrémité supérieure (230T) de canal et une extrémité inférieure (230B) de canal,
la deuxième région (342) étant une zone comprise entre l'extrémité inférieure (230B) du canal et l'extrémité inférieure (200B) du tapis, le long de la direction (Y) perpendiculaire à la direction longitudinale (X), et comprise entre la première vessie pneumatique (210) et la seconde vessie pneumatique (220), le long de la direction longitudinale (X).

7. Tapis pneumatique (300) selon la revendication 6,
la deuxième partie (312) étant une partie de la première vessie pneumatique (210) comprise entre l'extrémité inférieure (230B) du canal et l'extrémité inférieure (200B) du tapis.

8. Tapis pneumatique (300) selon l'une quelconque des revendications 5 à 7,
une zone de la deuxième région (342) étant sensiblement superposable à une zone de la deuxième partie (312) tournée de 180°.

9. Tapis pneumatique (400) selon l'une quelconque des revendications précédentes,
le canal (230) reliant la première (210) et la seconde (220) vessie le long d'une direction longitudinale (X),
le canal (230) ayant une longueur (233) de canal le long de la direction longitudinale (X),
une troisième région (443) étant définie entre la seconde vessie pneumatique (210) et une première vessie pneumatique supplémentaire (410') hypothétique, la première vessie pneumatique supplémentaire (410') correspondant à la première vessie pneumatique (210) et étant hypothétiquement placée à une distance, de la seconde vessie (220) et le long de la direction longitudinale (X), correspondant à la longueur (233) du canal,
la troisième région (443) ayant une forme correspondant sensiblement à une troisième partie (423) de la seconde vessie pneumatique (220).

10. Tapis pneumatique (400) selon la revendication 9,
la troisième région (443) étant une zone comprise entre l'extrémité inférieure (230B) du canal et l'extrémité inférieure (200B) du tapis, le long de la direction (Y) perpendiculaire à la direction longitudinale (X), et comprise entre la seconde vessie pneumatique (220) et la première vessie pneumatique supplémentaire (410'), le long de la direction longitudinale (X).

11. Tapis pneumatique (400) selon la revendication 9 ou 10,
la troisième partie (423) étant une partie de la seconde vessie pneumatique (220) comprise entre l'extrémité inférieure (230B) du canal et l'extrémité inférieure (200B) du tapis.

12. Tapis pneumatique (400) selon l'une quelconque des revendications 9 à 11, une zone de la troisième région (443) étant sensiblement superposable à une zone de la troisième partie (423) tournée de 180°.

13. Tapis pneumatique (400) selon l'une quelconque des revendications précédentes,
le canal (230) reliant la première (210) et la seconde (220) vessie le long d'une direction longitudinale (X),
le canal (230) ayant une longueur (233) de canal le long de la direction longitudinale (X),
une quatrième région (544) étant définie entre la seconde vessie pneumatique (210) et une première vessie pneumatique supplémentaire (410') hypothétique, la première vessie pneumatique supplémentaire (410') correspondant à la première vessie pneumatique (410') et étant hypothétiquement placée à une distance, de la seconde vessie (220) et le long de la direction longitudinale (X), correspondant à la longueur (233) du canal,
la quatrième région (544) ayant une forme correspondant sensiblement à une quatrième partie (524) de la seconde vessie pneumatique (220).

14. Tapis pneumatique (400) selon la revendication 13,
le canal (230) reliant la première (210) et la seconde (220) vessie le long d'une direction longitudinale (X) et, le long d'une direction (Y) perpendiculaire à la direction longitudinale (X), le canal (230) s'étendant entre une extrémité supérieure (230T) de canal et une extrémité inférieure (230B) de canal,
la quatrième région (544) étant une zone comprise entre l'extrémité inférieure (230B) du canal et l'extrémité inférieure (200B) du tapis, le long de la direction (Y) perpendiculaire à la direction longitudinale (X), et comprise entre la seconde vessie pneumatique (220) et la première vessie pneumatique supplémentaire (410'), le long de la direction longitudinale (X).

15. Tapis pneumatique (400) selon la revendication 14,
la quatrième partie (524) étant une partie de la première vessie pneumatique (210) comprise entre l'extrémité inférieure (230B) du canal et l'extrémité inférieure (200B) du tapis.

16. Tapis pneumatique (400) selon l'une quelconque des revendications 13 à 15, une zone de la quatrième région (544) étant sensiblement superposable à une zone de la quatrième partie (524) tournée de 180°.

17. Tapis pneumatique (600) selon la revendication 1,
la partie gonflable (613) inscrivant un cercle inscrit (616) et exinscrivant un cercle exinscrit (617), et
une différence de rayon entre le cercle inscrit (616) et le cercle exinscrit (617), par rapport au rayon du cercle exinscrit (617), étant inférieure à 20 %, de préférence inférieure à 15 %.

18. Tapis pneumatique (600) selon la revendication 17,
le cercle inscrit (616) et le cercle exinscrit (617) ayant le même centre.

19. Tapis pneumatique (600) selon l'une quelconque des revendications 1 à 18,
le canal (230) reliant la première (210) et la seconde (220) vessie le long d'une direction longitudinale (X) et, le long d'une direction (Y) perpendiculaire à la direction longitudinale (X), le canal (230) s'étendant entre une extrémité supérieure (230T) de canal et une extrémité inférieure (230B) de canal,
la partie gonflable (613) s'étendant entre une extrémité supérieure (613T) de la partie gonflable et une extrémité inférieure (613B) de la partie gonflable, le long de la direction (Y) perpendiculaire à la direction longitudinale (X), et
l'extension du canal (230) le long de la direction (Y) perpendiculaire à la direction longitudinale (X) chevauchant un point médian entre l'extrémité supérieure (613T) de la partie gonflable et l'extrémité inférieure (613B) de la partie gonflable.

20. Tapis pneumatique (600) selon l'une quelconque des revendications 1 à 19,
le canal (230) reliant la première (210) et la seconde (220) vessie le long d'une direction longitudinale (X) et, le long d'une direction (Y) perpendiculaire à la direction longitudinale (X), le canal (230) s'étendant entre une extrémité supérieure (230T) de canal et une extrémité inférieure (230B) de canal,
la partie gonflable (613) s'étendant entre une extrémité supérieure (613T) de la partie gonflable et une extrémité inférieure (613B) de la partie gonflable, le long de la direction (Y) perpendiculaire à la direction longitudinale (X), et
une distance entre l'extrémité supérieure (230T) du canal et l'extrémité inférieure (230B) du canal étant inférieure à 35 %, de préférence inférieure à 30 %, de préférence encore inférieure à 25 % d'une distance entre l'extrémité supérieure (613T) de la partie gonflable et l'extrémité inférieure (613B) de la partie gonflable.

21. Procédé de fabrication de vessies pneumatiques (200, 300, 400, 500, 600) selon l'une quelconque des revendications précédentes, comprenant les étapes suivantes
le positionnement d'une première feuille de matériau souple au-dessus d'une seconde feuille de matériau souple,
le collage de la première et de la seconde feuille de matériau souple de manière à obtenir des rangées paires (R2, R4, R6) de vessies pneumatiques (200, 300, 400, 500, 600) et des rangées impaires (R1, R3, R5) de vessies pneumatiques (200, 300, 400, 500, 600),
**caractérisé en ce que**
les tapis pneumatiques (200, 300, 400, 500, 600) des rangées paires (R2, R4, R6) sont décalés par rapport aux tapis pneumatiques (200, 300, 400, 500, 600) des rangées impaires (R1, R3, R5).

22. Procédé de fabrication selon la revendication 21,
les tapis pneumatiques (200, 300, 400, 500, 600) des rangées paires (R2, R4, R6) étant tournés de 180° par rapport aux tapis pneumatiques (200, 300, 400, 500, 600) des rangées impaires (R1, R3, R5).
